# EUROPÄISCHE PATENTSCHRIFT

(11) **EP 1 134 460 B1**
(45) Veröffentlichungstag und Bekanntmachung des Hinweises auf die Patenterteilung: **28.04.2004**
(21) Anmeldenummer: 01102654.9
(22) Anmeldetag: 07.02.2001
(51) Int. Cl.: F16H 61/12

(54) **Erfassung eines Notfalles in der Kommunikationsverbindung der Getriebesteuereinheit eines KFZ**
Failure detection in the communication links of the electronic control unit of a motor vehicle transmission
Détection d' urgence dans la communication d' un système de contrôle d'une boite de vitesse d' une véhicule a moteur

(30) Priorität: 16.03.2000 DE 10012833
(43) Veröffentlichungstag der Anmeldung: 19.09.2001
(73) Patentinhaber: Bayerische Motoren Werke Aktiengesellschaft, 80809 München (DE)
(72) Erfinder: Ehrmaier, Rudolf, 81927 München (DE); Neuner, Josef, 83064 Raubling (DE); Fürst, Sigmund, Dr., 82216 Maisach (DE)

(56) Entgegenhaltungen:
- WO-A-00/52360
- DE-A- 19 810 479
- US-A- 4 838 124
- US-A- 5 405 303

## Beschreibung

Die Erfindung bezieht sich auf ein Kraftfahrzeug mit einem von einer elektronischen Getriebeeinheit gesteuerten Getriebe nach dem Oberbegriff des Patentanspruchs 1.

Ein derartiges Kraftfahrzeug ist beispielsweise in der nicht vorveröffentlichten WO 00/52360 beschrieben.

Die Erfindung geht von einem Kraftfahrzeug aus mit einem von einer elektronischen Getriebeeinheit gesteuerten Getriebe und mit einer von einer elektronischen Motoreinheit gesteuerten Brennkraftmaschine. Die Getriebeeinheit und die Motoreinheit können in einem Steuergerät zusammengefaßt sein oder in zwei getrennte Steuergeräte aufgeteilt sein. In jedem Fall ist zwischen der Getriebeeinheit und der Motoreinheit eine Kommunikationsverbindung -bei zwei getrennten Steuergeräten insbesondere in Form eines digitalen Datenbusses (z. B. CAN)- vorgesehen. Üblicherweise setzt die Getriebeeinheit im Normalfall abhängig von der Einstellung eines Gangwählschalters den gewählten Gang durch Ansteuerung von Aktuatoren im Getriebe um. Der Begriff Gangwählschalter soll hier im weitesten Sinne verstanden werden, nämlich beispielsweise sowohl als Wählschalter für eine Fahrstufe bei einem (halb-) automatischen Handschaltgetriebe (1. Gang, 2. Gang ..., Rückwärts-Gang, Neutralstellung) als auch als Wählschalter für eine Fahrposition (P, R, N, D,...) bei einem Automatikgetriebe.

Bei den neuen elektronisch gesteuerten Getrieben wird derzeit keine mechanische Verbindung mehr zwischen dem elektrischen bzw. elektronischen Gangwählschalter und dem Getriebe vorgesehen. Zwischen dem Gangwählschalter und der Getriebeeinheit erfolgt eine rein elektrische Signalübertragung.

Bei einem Defekt des Gangwählschalters oder bei einer Unterbrechung der Signalübertragungsleitung zwischen dem Gangwählschalter und der Getriebeeinheit kann die Einstellung des Gangwählschalters nicht mehr erkannt werden. Die Getriebeeinheit steuert das Getriebe daraufhin in einen Notlauf, in dem u.U. der gewählte Gang (die gewählte Position) beibehalten wird. Eine vom Fahrer möglicherweise gewollte Fahrtrichtungsänderung würde somit nicht ausgeführt werden.

Weiterhin kann das Getriebesteuergerät selbst defekt sein, so daß der gewählte Gang entsprechend der Einstellung des Gangwählschalters durch die Getriebesteuereinheit nicht im Getriebe umgesetzt werden kann. Bei Totalausfall der Getriebeeinheit stellt sich ein sog. mechanischer Notlauf ein, in dem ebenfalls u.U. der gewählte Gang (die gewählte Position) beibehalten und eine vom Fahrer möglicherweise gewollte Fahrtrichtungsänderung nicht ausgeführt wird.

Es ist bereits bekannt, in derartigen Notlauf-Situationen den Fahrer durch entsprechende Rückmeldungen zu warnen (vgl. z. B. die gattungsbildende DE 198 10 479 A1). In Einzelfällen könnte es jedoch sein, dass der Fahrer diese Rückmeldungen übersieht bzw. überhört.

Darüber hinaus, ist es aus der nicht vorveröffentlicher WO 00/52360 auch bekannt, daß die Motoreinheit in einem über die Kommunikationsverbindung mit der Getriebeeinheit erfaßbaren Notfall, in dem die Einstellung des Gangwählschalters von der Getriebeeinheit nicht erkannt und/oder der gewählte Gang nicht im Getriebe umgesetzt werden kann, eine Begrenzung der Beschleunigung vornimmt.

Es ist Aufgabe der Erfindung, im Hinblick auf die oben beschriebenen Notlauf-Situationen die Sicherheit zu erhöhen.

Diese Aufgabe wird durch die Merkmale des Patentanspruchs 1 gelöst. Vorteilhafte Weiterbildungen der Erfindung sind die Gegenstände der abhängigen Ansprüche.

Erfindungsgemäß nimmt die Motoreinheit in einem über die Kommunikationsverbindung erfaßbaren Notfall, in dem die Einstellung des Gangwählschalters von der Getriebeeinheit nicht erkannt und/oder der gewählte Gang nicht im Getriebe umgesetzt werden kann, eine geschwindigkeitsabhängige Begrenzung der Beschleunigung vor. Unter dem Begriff Gang kann sowohl ein bestimmter Rückwärts- oder Vorwärtsgang (R-Gang oder z. B. 1. Gang) als auch eine Rückwärts- oder Vorwärts-Fahrposition ("R" oder z. B. "D") verstanden werden.

Der Notfall wird vorzugsweise von der Motoreinheit dadurch erfaßt, daß die Getriebeeinheit aktiv ein entsprechendes Notfallsignal auf die Kommunikationsverbindung ausgibt. Alternativ oder zusätzlich kann der Notfall von der Motoreinheit dadurch erfaßt werden, daß die Getriebeeinheit keine oder unplausible Signale auf die Kommunikationsverbindung ausgibt.

Bei der ersten Alternative liegt eher ein von der Getriebeeinheit erkennbarer Defekt im Gangwählschalter oder in der Signalübertragungsleitung zwischen Gangwählschalter und Getriebeeinheit vor. Die Getriebeeinheit kann hierbei einen definierten Notlauf, z. B. das Festhalten des vor dem Defekt vorliegenden Ganges, aktivieren. In einem derartigen Fall. ist der Getriebeeinheit bekannt, welcher Gang eingelegt ist. Hierbei könnte das aktiv ausgegebene Notfallsignal lediglich dann ausgegeben werden, wenn und solange tatsächlich ein Rückwärts- oder Vorwärtsgang festgehalten wird. Löst der definierte Notlauf jedoch das Einlegen der Neutralstellung aus, ist die Ausgabe eines Notfallsignals nicht dringend erforderlich, um die erfindungsgemäße Begrenzungsfunktion in der Motoreinheit auszulösen, da diese in der Neutralstellung ins Leere ginge.

Bei der zweiten Alternative liegt eher ein Totalausfall der Getriebeeinheit vor. In diesem Fall muß die Motoreinheit vom schlimmsten Fall ausgehen und selbst die Begrenzungsfunktion ausführen.

Die Begrenzung der Beschleunigung wird, insbesondere durch eine Momentenbegrenzung der Brennkraftmaschine, geschwindigkeitsabhängig vorgenommen.

Die erfindungsgemäße Begrenzungsfunktion wird vorzugsweise beim Anfahren bzw. bei einer Geschwindigkeit unterhalb eines sehr niedrigen Schwellwertes gestartet.

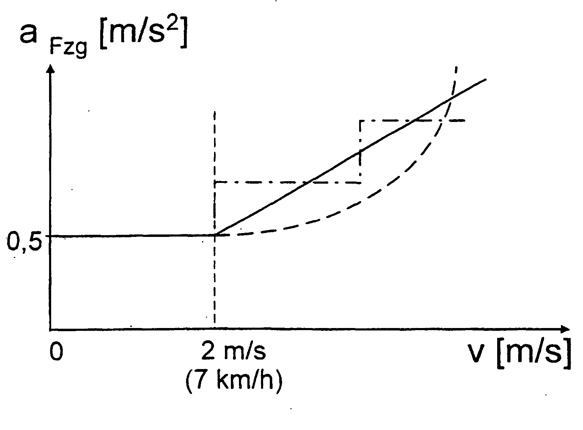

In der Zeichnung ist ein Ausführungsbeispiel der Erfindung dargestellt. Sie zeigt eine erfindungsgemäße Begrenzung der Beschleunigung in Form einer Anfahrbeschleunigungsbegrenzung.

Auf der Abszisse ist die Fahrzeug-Geschwindigkeit v, auf der Ordinate die Fahrzeug-Beschleunigung a_{FZG} aufgetragen. Die Begrenzung der Beschleunigung wird hier durch die Vorgabe einer maximal zulässigen Begrenzungskurve vorgenommen. Dabei wird die Beschleunigung unterhalb eines vorgegebenen Geschwindigkeitswertes v=7 [km/h] (bzw. 2 [m/s]) konstant auf 0,5 [m/s²] gehalten. Die Begrenzungskurve steigt anschließend vorzugsweise linear an. Die Begrenzungskurve kann jedoch jede beliebige Form, z. B. kontinuierlich (gestrichelte Linie) oder stufenförmig (strichpunktierte Linie) steigend, annehmen.

Die Begrenzungsfunktion kann auch nach Zurücklegen einer vorgegebenen Wegstrecke oder nach Erreichen einer vorgegebenen Geschwindigkeit oder Beschleunigung ausgeschaltet werden (hier nicht dargestellt). Die Begrenzungsfunktion wird mittels Momentenbegrenzung durchgeführt, wobei beispielsweise der Zündzeitpunkt, die Einspritzzeit oder/oder die Stellung eines Drosselorgans beeinflußt werden.

## Patentansprüche

1. Kraftfahrzeug mit einem von einer elektronischen Getriebeeinheit gesteuerten Getriebe und mit einer von einer elektronischen Motoreinheit gesteuerten Brennkraftmaschine, wobei die Getriebeeinheit im Normalfall abhängig von der Einstellung eines Gangwählschalters den gewählten Gang durch Ansteuerung von Aktuatoren im Getriebe umsetzt und wobei zwischen der Getriebeeinheit und der Motoreinheit eine Kommunikationsverbindung vorgesehen ist, **dadurch gekennzeichnet, daß** die Motoreinheit in einem über die Kommunikationsverbindung erfaßbaren Notfall, in dem die Einstellung des Gangwählschalters von der Getriebeeinheit nicht erkannt und/oder der gewählte Gang nicht im Getriebe umgesetzt werden kann, eine Begrenzung der Beschleunigung vornimmt, wobei die Begrenzung der Beschleunigung geschwindigkeitsabhängig vorgenommen wird.

2. Kraftfahrzeug nach Patentanspruch 1, **dadurch gekennzeichnet, daß** der Notfall von der Motoreinheit dadurch erfaßt wird, daß die Getriebeeinheit aktiv ein entsprechendes Notfallsignal auf die Kommunikationsverbindung ausgibt.

3. Kraftfahrzeug nach Patentanspruch 1, **dadurch gekennzeichnet, daß** der Notfall von der Motoreinheit dadurch erfaßt wird, daß die Getriebeeinheit keine oder unplausible Signale auf die Kommunikationsverbindung ausgibt.

## Claims

1. A motor vehicle with a transmission controlled by an electronic transmission unit and with an internal-combustion engine controlled by an electronic engine unit, wherein the transmission unit normally shifts the selected gear by control of actuators in the transmission as a function of the adjustment of a gear selection switch and wherein between the transmission unit and the engine unit, a communication connection is provided, **characterised in that** the engine unit implements a limitation of the acceleration in an emergency which can be detected by the communication connection and in which the adjustment of the gear selection switch cannot be detected by the transmission unit and/or the selected gear cannot be shifted in the transmission, the limitation of the acceleration being implemented in dependence upon speed.

2. A motor vehicle according to claim 1, **characterised in that** the emergency is detected by the engine unit **in that** the transmission unit actively emits a corresponding emergency signal to the communication connection.

3. A motor vehicle according to claim 1, **characterised in that** the emergency is detected by the engine unit **in that** the transmission unit emits no signals or implausible signals to the communication connection.

## Revendications

1. Véhicule automobile avec une boîte de vitesses commandée par une unité de boîte de vitesses électronique et avec un moteur à combustion interne commandé par une unité de moteur électronique, l'unité de boîte de vitesses engageant le rapport sélectionné en excitant des actuateurs dans la boîte de vitesses, normalement en fonction du réglage d'un sélecteur de vitesses et une liaison de communication étant prévue entre l'unité de moteur et l'unité de boîte de vitesses,
**caractérisé en ce que**
l'unité de moteur limite l'accélération dans un cas d'urgence détectable via la liaison de communication dans lequel le réglage du sélecteur de vitesses ne peut pas être détecté par l'unité de boîte de vitesses et/ou le rapport sélectionné ne peut pas être engagé dans la boîte de vitesses, la limitation de l'accélération se produisant en fonction de la vitesse.

2. Véhicule automobile selon la revendication 1,
**caractérisé en ce que**
le cas d'urgence est détecté par l'unité de moteur par le fait que l'unité de boîte de vitesses émet activement un signal de cas d'urgence correspondant sur la liaison de communication.

3. Véhicule automobile selon la revendication 1,
**caractérisé en ce que**
le cas d'urgence est détecté par l'unité de moteur par le fait que l'unité de boîte de vitesses n'émet aucun signal du tout ou aucun signal plausible sur la liaison de communication.
